# EUROPÄISCHE PATENTSCHRIFT

(11) **EP 3 160 805 B1**
(45) Veröffentlichungstag und Bekanntmachung des Hinweises auf die Patenterteilung: **16.01.2019**
(21) Anmeldenummer: 15719760.9
(22) Anmeldetag: 08.05.2015
(51) Int. Cl.: B60T 8/40, B60T 8/36

(54) **ANORDNUNG FÜR EINE HYDRAULISCHE KRAFTFAHRZEUG-BREMSANLAGE SOWIE BREMSANLAGE MIT EINER SOLCHEN ANORDNUNG**
ASSEMBLY FOR A HYDRAULIC MOTOR-VEHICLE BRAKE SYSTEM AND BRAKE SYSTEM HAVING SUCH AN ASSEMBLY
DISPOSITIF POUR SYSTÈME DE FREINAGE HYDRAULIQUE DE VÉHICULE AUTOMOBILE ET SYSTÈME DE FREINAGE ÉQUIPÉ D'UN TEL DISPOSITIF

(30) Priorität: 30.06.2014 DE 102014212538
(43) Veröffentlichungstag der Anmeldung: 03.05.2017
(73) Patentinhaber: Continental Teves AG & Co. OHG, 60488 Frankfurt am Main (DE)
(72) Erfinder: DRUMM, Stefan, 55291 Saulheim (DE); BESIER, Marco, 65307 Bad Schwalbach (DE)
(86) Internationale Anmeldenummer: PCT/EP2015/060171
(87) Internationale Veröffentlichungsnummer: WO 2016/000857

(56) Entgegenhaltungen:
- WO-A1-03/033323
- WO-A1-2009/089944
- WO-A1-2012/028521
- WO-A1-2012/150120
- US-A1- 2007 208 481

## Beschreibung

Die Erfindung betrifft eine Anordnung für eine hydraulische Kraftfahrzeug-Bremsanlage gemäß dem Oberbegriff von Anspruch 1 sowie eine Bremsanlage gemäß dem Oberbegriff von Anspruch 12.

In der WO 03/033323 A1 wird eine Bremsanlage beschrieben mit einem bremspedalbetätigbaren Hauptbremszylinder, einem Druckmittelvorratsbehälter, einer elektrisch steuerbaren Druckregelventileinrichtung mit einem Einlass- und Auslassventil für jede Radbremse und einer elektrisch steuerbaren Pumpe, deren Saugseite über eine Parallelschaltung aus Rückschlagventil und elektrisch beätigbarem Druckregelventil mit dem Druckmittelvorratsbehälter hydraulisch verbunden ist.

Aus der internationalen Patentanmeldung WO 2012/150120 A1 ist eine hydraulische Kraftfahrzeugbremsanlage bekannt mit einem Bremspedal-betätigbaren, zweikreisigen Hauptbremszylinder, einer elektrisch steuerbaren Druckmodulationseinrichtung zum Einstellen radindividueller Bremsdrücke und einer elektronisch steuerbare Druckbereitstellungseinrichtung mit zwei Pumpen sowie einem stromlos offenen, analog ansteuerbaren Ventil und einem stromlos geschlossenen, analog ansteuerbaren Ventil je Bremskreis. Dabei ist eine der Pumpen saugseitig direkt mit einem der Hauptbremszylinder-Druckräume und die andere Pumpe saugseitig direkt mit dem Druckmittelvorratsbehälter verbunden. Die Druckseiten der Pumpen eines Bremskreises sind zusammengeschaltet und bilden den entsprechenden Ausgangsdruckanschluss der Druckbereitstellungseinrichtung, der mit den zugeordneten Einlassventilen verbunden ist. Das stromlos geschlossene Analogventil der Druckbereitstellungseinrichtung öffnet, sobald die an ihm anliegende Druckdifferenz einen konstruktiv vorbestimmten Öffnungsdruckwert erreicht. Dies hat zur Folge, dass bei einer kräftigen Betätigung des Bremspedals unter Umständen Druckmittelvolumen aus dem Hauptbremszylinder in den Druckmittelvorratsbehälter abfließen kann, so dass das Bremspedal entsprechend durchsinkt. Dies ist ein Nachteil der vorbekannten Druckbereitstellungseinrichtung. Ein weiterer Nachteil dieser Druckbereitstellungseinrichtung ist es, dass ein Bereitschaftsbetrieb, in dem die Pumpen zwar angetrieben werden, aber noch keine Volumenverschiebungen zwischen erstem, zweitem und drittem Anschluss vorgenommen werden, nicht möglich ist, wenn der Ausgangsdruck höher als der Atmosphärendruck ist.

Es ist daher eine Aufgabe der vorliegenden Erfindung, eine Anordnung mit zumindest einer Pumpe und Ventilen sowie eine entsprechende Bremsanlage bereitzustellen, welche den letztgenannten Nachteil beseitigt.

Diese Aufgabe wird erfindungsgemäß durch eine Anordnung gemäß Anspruch 1 und eine Bremsanlage gemäß Anspruch 12 gelöst.

Der Erfindung liegt der Gedanke zugrunde, dass die Anordnung eine Pumpenanordnung mit zumindest einer ersten Saugseite, welche mit dem zweiten Anschluss verbunden ist, eine hydraulische Verbindung zwischen dem ersten Anschluss und dem Ausgangsdruckanschluss, in welcher ein stromlos offen ausgeführtes, analog ansteuerbares erstes Ventil angeordnet ist, und eine hydraulische Verbindung zwischen dem ersten Anschluss und dem zweiten Anschluss, in welcher ein stromlos geschlossen ausgeführtes zweites Ventil angeordnet ist, umfasst, wobei die der ersten Saugseite zugeordnete erste Druckseite der Pumpenanordnung über ein stromlos offen ausgeführtes, analog ansteuerbares drittes Ventil mit der ersten Saugseite verbunden ist. Somit ist bei unbestromtem drittem Ventil die erste Druckseite mit der ersten Saugseite hydraulisch kurzgeschlossen. Die erste Saugseite der Pumpenanordnung ist direkt, d.h. ohne Zwischenschaltung eines Ventils, mit dem zweiten Anschluss verbunden, so dass Strömungswiederstände beim Ansaugen aus dem Druckmittelvorratsbehälter vermieden werden.

Die Erfindung bietet den Vorteil, dass zum Herstellen eines Bereitschaftszustands mit hoher potenzieller Druckaufbaudynamik lediglich die Pumpenanordnung angetrieben werden muss, ohne dass ein Ventil anzusteuern (zu bestromen) ist. Dabei fördert die Pumpenanordnung praktisch differenzdruckfrei Druckmittel, das über das offene dritte Ventil von der ersten Druckseite zu der ersten Saugseite zurückgeführt wird. Für einen schnellen Druckaufbau muss dann lediglich das dritte Ventil geschlossen werden und der Druckaufbau ist nicht dadurch begrenzt, dass zunächst der Antrieb der Pumpenanordnung seine Nenndrehzahl erreichen muss.

In einem passiven (d.h. stromlosen) Modus der Anordnung bzw. Bremsanlage ist ein ungehinderter Druckmittelvolumenaustausch zwischen dem ersten Anschluss (dem Hauptbremszylinder) und dem Ausgangsdruckanschluss (der Druckmodulationseinrichtung) über das offene erste Ventil möglich, während ein Druckmittelvolumenaustausch zwischen dem ersten Anschluss (dem Hauptbremszylinder) und dem zweiten Anschluss (Druckmittelvorratsbehälter) durch das geschlossene zweite Ventil verhindert wird.

Der Ausgangsdruckanschluss ist bevorzugt mit einer Druckmodulationseinrichtung der Bremsanlage verbunden.

Bevorzugt ist in der Verbindung mit dem ersten Ventil zwischen dem ersten Anschluss und dem Ausgangsdruckanschluss kein weiteres Ventil angeordnet. In einem passiven (d.h. stromlosen) Modus der Anordnung bzw. Bremsanlage ist so ein ungehinderter Druckmittelvolumenaustausch zwischen dem ersten Anschluss (dem Hauptbremszylinder) und dem Ausgangsdruckanschluss (der Druckmodulationseinrichtung) möglich.

Zur Regelung einer Druckverstärkung zwischen dem Eingangsdruck am ersten Anschluss und dem Ausgangsdruck am Ausgangsdruckanschluss sind bevorzugt eine erste Druckerfassungseinrichtung, welche den Druck am ersten Anschluss erfasst, und eine zweite Druckerfassungseinrichtung, welche den Druck am Ausgangsdruckanschluss erfasst, vorhanden.

An die erste Druckseite der Pumpenanordnung ist bevorzugt ein in ihrer Volumenabgaberichtung öffnendes Rückschlagventil angeschlossen.

Gemäß einer bevorzugten Ausführungsform der erfindungsgemäßen Anordnung wird die Pumpenanordnung durch eine einzelne Pumpe mit der ersten Saugseite und der ersten Druckseite gebildet, wobei die Volumenabgabeseite des Rückschlagventils mit dem Ausgangsdruckanschluss verbunden ist. Somit ist die erste Druckseite über das Rückschlagventil mit dem Ausgangsdruckanschluss verbunden. Die Anordnung bietet den Vorteil, dass (pro Bremskreis) lediglich eine einzelne Pumpe benötigt wird. Bei geschlossenem drittem Ventil wird Druckmittel mittels der Pumpe von dem zweiten Anschluss (Druckmittelvorratsbehälter) über das Rückschlagventil zu dem Ausgangsdruckanschluss gepumpt. Bei geschlossenem oder teilweise geschlossenem erstem Ventil wird so eine Druckverstärkung an dem Ausgangsdruckanschluss erreicht. Bei geöffnetem oder teilweise geöffnetem erstem Ventil kann so geregelt Druckmittel von dem zweiten Anschluss (aus dem Druckmittelvorratsbehälter) über das Rückschlagventil und das erste Ventil zum ersten Anschluss (zum Hauptbremszylinder) gefördert werden. Besonders bevorzugt ist die Druckseite über das Rückschlagventil direkt, d.h. ohne Zwischenschaltung eines weiteren Ventils, mit dem dritten Anschluss verbunden.

In der hydraulischen Verbindung zwischen dem ersten Anschluss und dem zweiten Anschluss, in welcher das zweite Ventil angeordnet ist, ist bevorzugt ein stromlos offen ausgeführtes, analog ansteuerbares viertes Ventil in Reihe zu dem zweiten Ventil angeordnet. Die Einbaurichtung des zweiten Ventils ist, im Unterschied zur Einbaurichtung des vierten Ventils, besonders bevorzugt derart gewählt, dass eine Druckbeaufschlagung des ersten Anschlusses zu einem Anpressen des Ventilstößels auf den Ventilsitz führt. Dies bietet den Vorteil, dass bei unbestromtem zweitem Ventil möglicherweise auftretende Druckstöße im ersten Anschluss nicht zu einem unerwünschten Abströmen von Druckmittel zum zweiten Anschluss führen.

Gemäß einer weiteren bevorzugten Ausführungsform der erfindungsgemäßen Anordnung wird die Pumpenanordnung durch eine erste Pumpe mit der ersten Saugseite und der ersten Druckseite und eine zweite Pumpe mit einer zweiten Saugseite und einer zweiten Druckseite gebildet. Diese Anordnung bietet den Vorteil, mit nur drei elektrisch steuerbaren Ventilen auszukommen.

Bevorzugt ist die zweite Pumpe dem ersten Ventil parallel geschaltet, wobei die zweite Saugseite mit dem ersten Anschluss und die zweite Druckseite mit dem Ausgangsdruckanschluss verbunden sind. Hierdurch kann mittels der zweiten Pumpe bei geschlossenem oder teilweise geschlossenem erstem Ventil eine Druckverstärkung an dem Ausgangsdruckanschluss erreicht werden.

Bevorzugt ist die Druckseite der ersten Pumpe über das zweite Ventil mit dem ersten Anschluss verbindbar. Bei geöffnetem zweitem Ventil und zumindest teil- oder zeitweise geschlossenem dritten Ventil kann so Druckmittel mittels der ersten Pumpe von dem zweiten Anschluss (d.h. aus dem Druckmittelvorratsbehälter) kontrolliert zu dem ersten Anschluss (d.h. in den Hauptbremszylinder) gepumpt werden, ohne dass das Druckmittel über das erste Ventil fließen muss.

Gemäß einer bevorzugten Ausführungsform ist die Volumenabgabeseite des Rückschlagventils mit dem ersten Anschluss verbunden. Damit ist die erste Druckseite über das Rückschlagventil mit dem ersten Anschluss verbunden. Besonders bevorzugt ist die Druckseite der ersten Pumpe über das Rückschlagventil direkt, d.h. ohne Zwischenschaltung eines weiteren Ventils, mit dem ersten Anschluss verbunden.

Gemäß einer anderen bevorzugten Ausführungsform ist die Volumenabgabeseite des Rückschlagventils mit dem Ausgangsdruckanschluss verbunden. Somit ist die Druckseite der ersten Pumpe über das Rückschlagventil mit dem Ausgangsdruckanschluss verbunden. So kann ein schnellerer Druckaufbau am Ausgangsdruckanschluss erzielt werden, da die Volumenströme der ersten und der zweiten Pumpe parallel geschaltet werden können. Besonders bevorzugt ist die Druckseite der ersten Pumpe über das Rückschlagventil direkt, d.h. ohne Zwischenschaltung eines weiteren Ventils, mit dem Ausgangsdruckanschluss verbunden.

Bevorzugt ist dem ersten Ventil ein in Richtung des Ausgangsdruckanschlusses hin öffnendes zweites Rückschlagventil parallel geschaltet.

In der hydraulischen Verbindung zwischen dem ersten Anschluss und dem zweiten Anschluss ist bevorzugt das stromlos geschlossene zweite Ventil und ein stromlos offenes, analog ansteuerbares Ventil (entweder das vierte Ventil oder das dritte Ventil je nach Ausführungsform der Pumpenanordnung) angeordnet. Besonders bevorzugt ist in der Verbindung kein weiteres Ventil angeordnet.

Die Erfindung betrifft auch eine Bremsanlage mit zumindest einer erfindungsgemäßen Anordnung.

Bevorzugt umfasst die Bremsanlage einen bremspedalbetätigbaren Hauptbremszylinder mit Druckräumen, wobei jedem Druckraum zumindest eine Radbremse zugeordnet ist, einen dem Hauptbremszylinder zugeordneten unter Atmosphärendruck stehenden Druckmittelvorratsbehälter, eine elektrisch steuerbare Druckmodulationseinrichtung zum Einstellen radindividueller Bremsdrücke mit zumindest einem Einlassventil für jede Radbremse und eine elektrisch steuerbare Pumpen-Ventil-Anordnung, welche je Druckraum des Hauptbremszylinders eine erfindungsgemäße Anordnung umfasst, wobei jeweils der erste Anschluss mit dem Druckraum verbunden ist, der zweite Anschluss mit dem Druckmittelvorratsbehälter verbunden ist, und der Ausgangsdruckanschluss mit den Einlassventilen der dem Druckraum zugeordneten Radbremsen verbunden oder verbindbar ist.

Bevorzugt umfasst die Bremsanlage eine weitere elektrisch steuerbare Druckbereitstellungseinrichtung. Diese wird besonders bevorzugt durch eine Zylinder-Kolben-Anordnung gebildet, deren Kolben durch einen elektromechanischen Aktuator betätigbar ist.

Gemäß einer Weiterbildung der Bremsanlage umfasst diese eine mittels eines elektrisch betätigbaren Simulatorfreigabeventils mit zumindest einem Druckraum des Hauptbremszylinders hydraulisch verbindbare Simulationseinrichtung, welche in einer "Brake-by-wire"-Betriebsart dem Fahrzeugführer ein angenehmes Bremspedalgefühl vermittelt.

Jede die Einlassventile eines Bremskreises verbindende Bremskreisversorgungsleitung ist bevorzugt über eine hydraulische Verbindungsleitung mit einem stromlos offenen Trennventil mit dem Ausgangsdruckanschluss der Anordnung und über eine weitere hydraulische Verbindungsleitung mit einem stromlos geschlossenen Zuschaltventil mit der Druckbereitstellungseinrichtung verbunden.

Bevorzugt sind eine erste, der Druckbereitstellungseinrichtung und der Druckmodulationseinrichtung zugeordnete elektronische Steuer- und Regeleinheit und eine zweite, der Pumpen-Ventil-Anordnung zugeordnete elektronische Steuer- und Regeleinheit vorgesehen.

Weitere bevorzugte Ausführungsformen der Erfindung ergeben sich aus den Unteransprüchen und der nachfolgenden Beschreibung anhand von Figuren.

Es zeigen
- Fig. 1: ein erstes Ausführungsbeispiel einer erfindungsgemäßen Anordnung,
- Fig. 2: ein zweites Ausführungsbeispiel einer erfindungsgemäßen Anordnung,
- Fig. 3: ein drittes Ausführungsbeispiel einer erfindungsgemäßen Anordnung,
- Fig. 4: ein viertes Ausführungsbeispiel einer erfindungsgemäßen Anordnung,
- Fig. 5: ein erstes Ausführungsbeispiel einer erfindungsgemäßen Bremsanlage,
- Fig. 6: ein zweites Ausführungsbeispiel einer erfindungsgemäßen Bremsanlage, und
- Fig. 7: ein drittes Ausführungsbeispiel einer erfindungsgemäßen Bremsanlage.

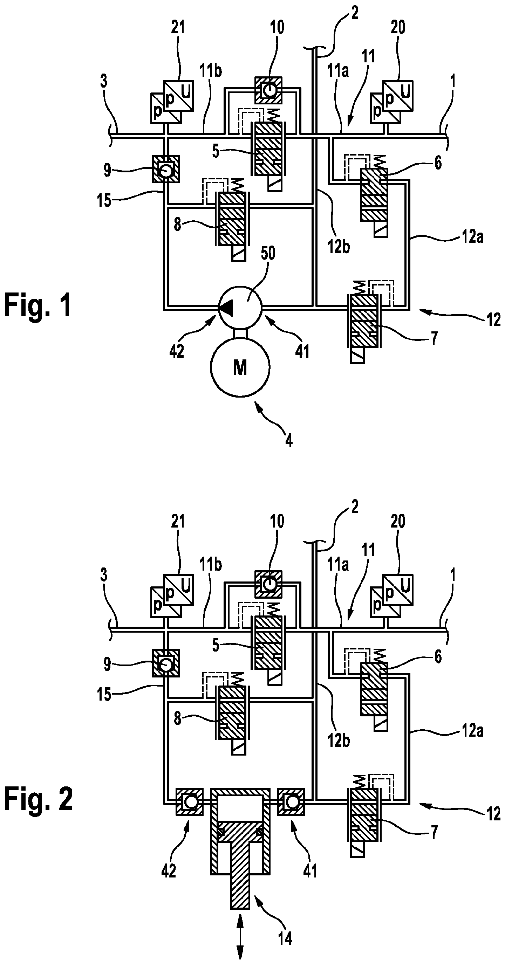

In Fig. 1 ist ein erstes Ausführungsbeispiel einer erfindungsgemäßen Anordnung für eine hydraulische Kraftfahrzeug-Bremsanlage dargestellt. Die Anordnung umfasst einen ersten Anschluss 1 zur Verbindung mit einem Druckraum eines Hauptbremszylinders, einen zweiten Anschluss 2 zur Verbindung mit einem, vorteilhafterweise unter Atmosphärendruck stehenden, Druckmittelvorratsbehälter, und einen Ausgangsdruckanschluss 3, zur Verbindung mit einer Druckmodulationseinrichtung. Die beispielgemäße Anordnung umfasst eine Pumpenanordnung 4 und vier elektrisch steuerbare Ventile 5, 6, 7, 8.

Das erste Ventil 5 (Druckanhebungsventil), welches stromlos offen und analog ansteuerbar ausgeführt ist, ist in einer hydraulischen Verbindung 11 zwischen dem ersten Anschluss 1 und dem Ausgangsdruckanschluss 3 mit den Leitungsabschnitten 11a und 11b angeordnet. Dem ersten Ventil 5 ist ein in Richtung des Ausgangsdruckanschlusses 3 öffnendes Rückschlagventil 10 parallel geschaltet.

In einer weiteren hydraulischen Verbindung 12, welche den ersten Anschluss 1 mit dem zweiten Anschluss 2 verbindet, sind das zweite Ventil 6 (Hauptbremszylinder-Abbau-Freigabeventil)und das vierte Ventil 7 (Hauptbremszylinder-Abbau-Dosierventil)in Reihenschaltung angeordnet. Die hydraulische Verbindung 12 besteht über die Leitungsabschnitte 11a, 12a und 12b. Das zweite Ventil 6 ist stromlos geschlossen ausgeführt, das vierte Ventil 7 ist stromlos offen und analog ansteuerbar ausgeführt, wobei von dem ersten Anschluss 1 her kommend, erst das zweite Ventil gefolgt von dem dritten Ventil angeordnet ist.

Die Pumpenanordnung 4 wird beispielsgemäß durch eine einzelne, von einem Elektromotor M angetriebene Pumpe 50 mit einer Saugseite 41 und einer Druckseite 42 gebildet. Der Pumpe 50 ist das dritte Ventil 8 (Staudruckventil) parallel geschaltet, welches stromlos offen und analog ansteuerbar ausgeführt ist. Die Saugseite 41 der Pumpe sowie der eine Anschluss des dritten Ventils 8 sind über den Leitungsabschnitt 12b mit dem zweiten Anschluss 2 verbunden. Die Saugseite 41 der Pumpenanordnung 4 ist direkt, d.h. ohne Zwischenschaltung eines Ventils, mit dem zweiten Anschluss 2 verbunden. Die Druckseite 42 der Pumpe sowie der andere Anschluss des dritten Ventils 8 sind über den Leitungsabschnitt 15 und ein in Richtung des Ausgangsdruckanschlusses öffnendes Rückschlagventil 9 mit dem Leitungsabschnitt 11b und somit dem Ausgangsdruckanschluss 3 verbunden. Bei geöffnetem erstem Ventil 5 ist somit die Druckseite 42 der Pumpenanordnung 4 mit dem ersten Anschluss 1 verbunden, wobei in dieser Verbindung das in Richtung des ersten Anschlusses öffnende Rückschlagventil 9 angeordnet ist.

Mittels der beispielsgemäßen Anordnung kann ein am ersten Anschluss 1 eingesteuerter Druck auf vorgegebene Werte des Druckes am Ausgangsdruckanschluss 3 angehoben bzw. verstärkt werden. Hierzu werden z.B. das erste Ventil 5 teilweise oder vollständig sowie das dritte Ventil 8 vollständig geschlossen und die Pumpe 50 angetrieben. Es stellt sich eine Druckdifferenz über dem ersten Ventil 5 ein, die durch geeignete Steuerung/Regelung des ersten Ventils 5 auf einen gewünschten Wert eingestellt werden kann. Das Druckmittel wird über den zweiten Anschluss 2 aus dem Druckmittelvorratsbehälter angesaugt. Durch optionales Öffnen des zweiten Ventils 6 und ggf. Regelung des vierten Ventils 7 kann auch Druckmittel aus dem Hauptbremszylinder entnommen werden.

Zur Regelung einer Druckverstärkung zwischen dem Eingangsdruck am ersten Anschluss 1 und dem Ausgangsdruck am Ausgangsdruckanschluss 3 sind eine erste Druckerfassungseinrichtung 20, welche den Druck am ersten Anschluss 1 erfasst, und eine zweite Druckerfassungseinrichtung 21, welche den Druck am Ausgangsdruckanschluss 3 erfasst, vorgesehen.

Mittels der beispielsgemäßen Anordnung kann das Druckmittelvolumen des Hauptbremszylinders verändert werden.

Zum kontrollierten Ablassen von Druckmittel aus dem Hauptbremszylinder (erster Anschluss 1) wird das zweite Ventil 6 geöffnet und über das vierte Ventil 7 geregelt Druckmittel über den zweiten Anschluss 2 in den Druckmittelvorratsbehälter abgelassen.

Zum Fördern von Druckmittel aus dem Druckmittelvorratsbehälter (vom zweiten Anschluss 2) in den Hauptbremszylinder (zum ersten Anschluss 1) wird das dritte Ventil 8 geschlossen und mittels der Pumpenanordnung 4 Druckmittel von dem zweiten Anschluss 2 über das Rückschlagventil 9 und das offene oder geregelt geöffnete erste Ventil 5 zum ersten Anschluss 1 gepumpt.

Das in Fig. 2 dargestellte zweite Ausführungsbeispiel einer erfindungsgemäßen Anordnung entspricht dem ersten Ausführungsbeispiel bezüglich der vier Ventile 5, 6, 7, 8 und der zwei Druckerfassungseinrichtungen 20, 21 sowie deren Anordnung und hydraulischen Verbindungen. Gemäß dem zweiten Ausführungsbeispiel ist eine Pumpenanordnung 14 vorgesehen, die durch eine Kolbenpumpe mit entsprechend angeordneten, nicht näher bezeichneten Rückschlagventilen für die Saug- und Druckseite gebildet wird.

Als Pumpentypen für die erfindungsgemäße Anordnung kommen alle Pumpen vom Typ "DruckmittelVolumenverdränger" in Frage, z.B. Zahnradpumpen oder Kolbenpumpen. Die Pumpen saugen direkt und ungedrosselt aus dem zweiten Anschluss 2 an.

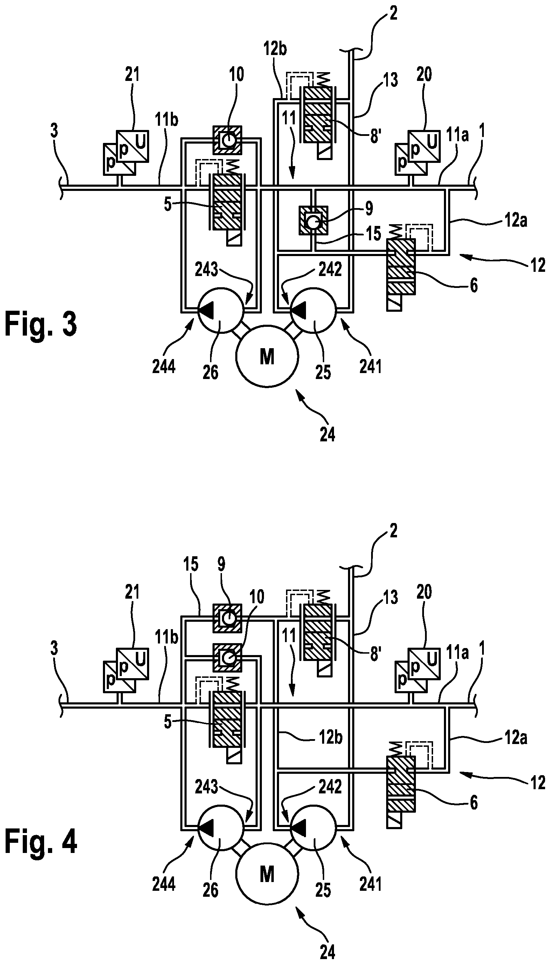

In Fig. 3 ist ein drittes Ausführungsbeispiel einer erfindungsgemäßen Anordnung für eine hydraulische Kraftfahrzeug-Bremsanlage dargestellt. Die Anordnung umfasst einen ersten Anschluss 1 zur Verbindung mit einem Druckraum eines Hauptbremszylinders, einen zweiten Anschluss 2 zur Verbindung mit einem, vorteilhafterweise unter Atmosphärendruck stehenden, Druckmittelvorratsbehälter, und einen Ausgangsdruckanschluss 3, zur Verbindung mit einer Druckmodulationseinrichtung. Die beispielgemäße Anordnung umfasst eine Pumpenanordnung 24 und drei elektrisch steuerbare Ventile 5, 6, 8'.

Das erste Ventil 5 (Druckanhebungsventil), welches stromlos offen und analog ansteuerbar ausgeführt ist, ist in einer hydraulischen Verbindung 11 zwischen dem ersten Anschluss 1 und dem Ausgangsdruckanschluss 3 mit den Leitungsabschnitten 11a und 11b angeordnet. Dem ersten Ventil 5 ist ein in Richtung des Ausgangsdruckanschlusses 3 öffnendes Rückschlagventil 10 parallel geschaltet.

In einer weiteren hydraulischen Verbindung 12, welche den ersten Anschluss 1 mit dem zweiten Anschluss 2 verbindet, sind das zweite Ventil 6 und das dritte Ventil 8' in Reihenschaltung angeordnet. Die hydraulische Verbindung 12 besteht über die Leitungsabschnitte 11a, 12a und 12b. Das zweite Ventil 6 ist stromlos geschlossen ausgeführt, das dritte Ventil 8' ist stromlos offen und analog ansteuerbar ausgeführt, wobei von dem ersten Anschluss 1 her kommend, erst das zweite Ventil 6 gefolgt von dem dritten Ventil 8' angeordnet ist.

Es sind eine erste Druckerfassungseinrichtung 20, welche den Druck am ersten Anschluss 1 erfasst, und eine zweite Druckerfassungseinrichtung 21, welche den Druck am Ausgangsdruckanschluss 3 erfasst, vorgesehen.

Die Pumpenanordnung 24 wird beispielsgemäß durch zwei, von einem Elektromotor M gemeinsam angetriebene Pumpen 25, 26 gebildet.

Die zweite Pumpe 26 ist dem ersten Ventil 5 parallel geschaltet, d.h. die Saugseite 243 der zweiten Pumpe 26 (zweite Saugseite 243 der Pumpenanordnung 24) ist mit dem ersten Anschluss 1 verbunden und die Druckseite 244 der zweiten Pumpe 26 (zweite Druckseite 244 der Pumpenanordnung 24) ist mit dem Ausgangsdruckanschluss 3 verbunden. Dabei sind die beiden genannten Verbindungen direkt ausgeführt, d.h. ohne Zwischenschaltung eines Ventils.

Die Saugseite 241 der ersten Pumpe 25 (erste Saugseite 241 der Pumpenanordnung 24) ist über den Leitungsabschnitt 13 mit dem zweiten Anschluss 2 direkt verbunden und die Druckseite 242 der ersten Pumpe 25 (erste Druckseite 242 der Pumpenanordnung 24) ist mit dem Leitungsabschnitt 12b zwischen zweitem und drittem Ventil 6, 8' verbunden, d.h. die erste Druckseite 242 ist über das dritte Ventil 8' mit dem zweiten Anschluss 2 hydraulisch drosselbar verbunden. Das dritte Ventil 8' ist somit parallel zur ersten Pumpe 25 angeordnet.

Der Leitungsabschnitt 12b ist wiederum über ein in Richtung des ersten Anschlusses 1 öffnendes Rückschlagventil 9 (im Leitungsabschnitt 15) mit dem Leitungsabschnitt 11a und somit dem ersten Anschluss 1 verbunden. Somit ist die erste Druckseite 242 der Pumpenanordnung 24 mit dem ersten Anschluss 1 verbunden, wobei in der Verbindung das in Richtung des ersten Anschlusses öffnende Rückschlagventil 9 angeordnet ist.

Mittels der beispielsgemäßen Anordnung kann ein am ersten Anschluss 1 eingesteuerter Druck unter Erhaltung der Volumenbilanz auf vorgegebene Werte des Druckes am Ausgangsdruckanschluss 3 angehoben bzw. verstärkt werden. Hierzu wird das erste Ventil 5 teilweise oder vollständig geschlossen und die Pumpe 26 wird angetrieben. Es stellt sich eine Druckdifferenz über dem ersten Ventil 5 ein, die durch geeignete Steuerung/Regelung des ersten Ventils 5 auf einen gewünschten Wert eingestellt werden kann. Damit wird Druckmittel vom ersten Anschluss 1 zum Ausgangsdruckanschluss 3 gefördert ohne dass ein Volumenaustausch über den zweiten Anschluss 2 erfolgt. Für den Fall, dass es während des Betriebes der Bremsanlage erforderlich ist, die Volumenbilanz zu ändern, wird zur Volumenvergrößerung Druckmittel von der ersten Pumpe 25 über den zweiten Anschluss 2 aus dem Druckmittelvorratsbehälter angesaugt und über das Rückschlagventil 9 in den Leitungsabschnitt 11a gepumpt, und zur Volumenminderung wird das zweite Ventil 6 geöffnet und das dritte Ventil 8' teilweise oder vollständig geöffnet, wodurch Druckmittel zum Vorratsbehälter abfließt.

Auch mittels dieser beispielsgemäßen Anordnung kann das Druckmittelvolumen des Hauptbremszylinders verändert werden.

Zum kontrollierten Ablassen von Druckmittel aus dem Hauptbremszylinder (erster Anschluss 1) wird das zweite Ventil 6 geöffnet und über das dritte Ventil 8' geregelt Druckmittel über den zweiten Anschluss 2 in den Druckmittelvorratsbehälter abgelassen.

Zum Fördern von Druckmittel aus dem Druckmittelvorratsbehälter (vom zweiten Anschluss 2) in den Hauptbremszylinder (zum ersten Anschluss 1) wird das dritte Ventil 8' geschlossen und mittels der ersten Pumpe 25 der Pumpenanordnung 24 Druckmittel von dem zweiten Anschluss 2 über das Rückschlagventil 9 zum ersten Anschluss 1 gefördert.

Bei dem in Fig. 3 dargestellten Ausführungsbeispiel mit separaten Pumpen 25, 26 für die Druckverstärkung am Ausgangsdruckanschluss 3 (Pumpe 25) und für die Hauptbremszylinder-Druckmittelvolumenbeeinflussung (Pumpe 26) kann die Funktion des Pumpens von Druckmittel aus dem Druckmittelvorratsbehälter in den Hauptbremszylinder ohne den hydraulischen Weg über den Ausgangsdruckanschluss 3 und das erste Ventil 5 (wie im ersten Ausführungsbeispiele) erzielt werden.

Für diese Pumpenanordnung 24 des dritten Ausführungsbeispiels vereinigt das dritte Ventil 8' in gewisser Weise die Funktionalitäten des dritten und vierten Ventils 8, 7 des ersten Ausführungsbeispiels.

In Fig. 4 ist ein viertes Ausführungsbeispiel einer erfindungsgemäßen Anordnung dargestellt, welches eine Pumpenanordnung 24 und drei elektrisch steuerbare Ventile 5, 6, 8' umfasst, die im Wesentlichen wie im dritten Ausführungsbeispiel miteinander verbunden sind. Im Unterschied zum dritten Ausführungsbeispiel ist der Leitungsabschnitt 12b über das Rückschlagventil 9 (im Leitungsabschnitt 15) mit dem Leitungsabschnitt 11b und somit dem Ausgangsdruckanschluss 3 verbunden. Rückschlagventil 9 ist in Richtung des Ausgangsdruckanschlusses 3 öffnend ausgeführt. Somit ist die erste Druckseite 242 der Pumpenanordnung 24 mit dem Ausgangsdruckanschluss 3 verbunden, wobei in der Verbindung das in Richtung des Ausgangsdruckanschlusses 3 und damit in Richtung des ersten Anschlusses 1 öffnende Rückschlagventil 9 angeordnet ist. Dieses Ausführungsbeispiel bietet den Vorteil, dass die Fördervolumenströme der beiden Pumpen 25, 26 für einen schnellen Druckaufbau am Ausgangsdruckanschluss 3 zusammengeschaltet sind.

Den erfindungsgemäßen Anordnungen der Fig. 1 bis 4 ist gemeinsam, dass in einem passiven (d.h. stromlosen) Modus der Anordnung bzw. Bremsanlage ein ungehinderter Druckmittelvolumenaustausch zwischen dem ersten Anschluss 1 (dem Hauptbremszylinder) und dem Ausgangsdruckanschluss 3 (der Druckmodulationseinrichtung) über das offene erste Ventil 5 möglich ist, während ein Druckmittelvolumenaustausch zwischen dem ersten Anschluss 1 (dem Hauptbremszylinder) und dem zweite Anschluss 2 (Druckmittelvorratsbehälter) durch das geschlossene zweite Ventil 6 verhindert wird.

Weiterhin kann in den beispielsgemäßen Anordnungen in einem aktiven Modus der Ausgangsdruck am Ausgangsdruckanschluss 3 auf frei vorgebbare Werte über dem Eingangsdruck am ersten Anschluss 1 (Hauptbremszylinderdruck) angehoben werden sowie das Druckmittelvolumen des Hauptbremszylinders verändert werden. Letzteres kann durch kontrolliertes Ablassen von Druckmittel aus dem Hauptbremszylinder in den Druckmittelvorratsbehälter oder durch kontrolliertes Pumpen von Druckmittelvolumen aus dem Druckmittelvorratsbehälter in den Hauptbremszylinder geschehen.

Auch ermöglichen die beispielsgemäßen Anordnungen einen energiesparenden Bereitschaftsmodus, in dem die Pumpenanordnung 4 bzw. 24 bereits angetrieben wird, aber noch kein nennenswerter Pumpendruck auf der ersten Druckseite 42 bzw. 242 aufgebaut wird, da das Ventil 8 bzw. die Ventile 5 und 8' noch nicht bestromt sind.

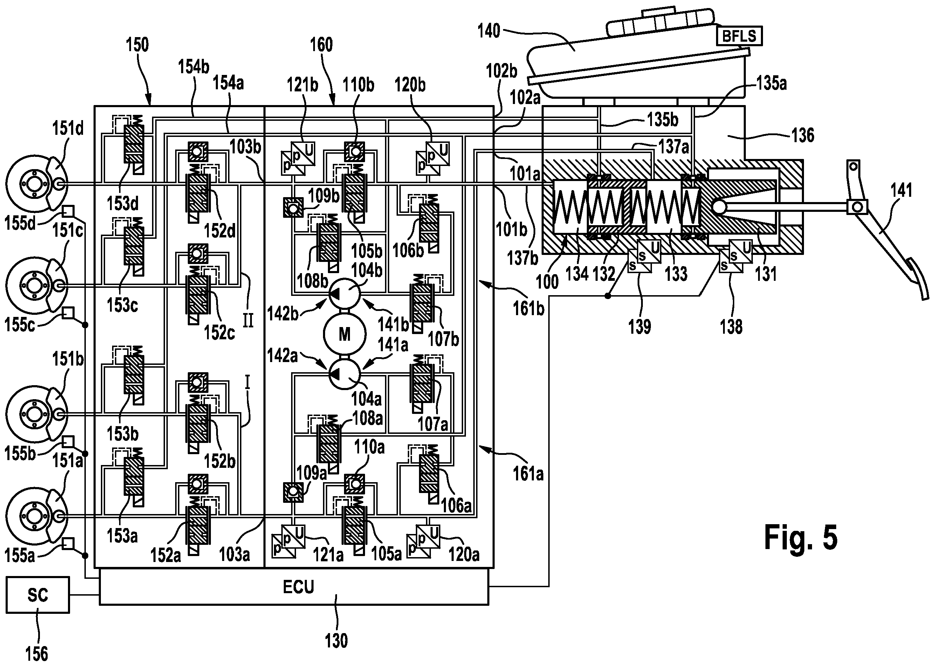

Das in Fig. 5 schematisch dargestellte erste Ausführungsbeispiel einer erfindungsgemäße Bremsanlage umfasst im Wesentlichen einen Hauptbremszylinder 100, welcher durch ein Bremspedal 141 über eine Druckstange direkt betätigbar ist, einen dem Hauptbremszylinder 100 zugeordneten unter Atmosphärendruck stehenden Druckmittelvorratsbehälter 140, eine elektrisch steuerbare Pumpen-Ventil-Anordnung 160, eine elektrisch steuerbare Druckmodulationseinrichtung 150 zum Einstellen radindividueller Bremsdrücke für die Radbremsen 151a-151d eines nicht dargestellten Kraftfahrzeugs und eine elektronische Steuer- und Regeleinheit (ECU: electronic control unit) 130, welche zur Ansteuerung der Pumpen-Ventil-Anordnung 160 und der Druckmodulationseinrichtung 150 dient.

Der zweikreisige Hauptbremszylinder 100 umfasst zwei hintereinander angeordnete Kolben 131, 132, die zwei hydraulische Druckräume 133, 134 begrenzen. Der erste Kolben 131 ist mechanisch mit dem Bremspedal 141 gekoppelt und wird direkt vom Fahrzeugführer, ohne Zwischenschaltung eines Bremskraftverstärkers betätigt. Die Druckräume 133, 134 stehen einerseits über in den Kolben 131, 132 ausgebildete radiale Bohrungen sowie entsprechende Druckausgleichsleitungen 135a, 135b mit dem Druckmittelvorratsbehälter 140 in Verbindung, wobei diese durch eine Relativbewegung der Kolben 131, 132 im Gehäuse 136 absperrbar sind. Andererseits steht jeder der Druckräume 133 bzw. 134 mittels einer hydraulischen Verbindung 137a bzw. 137b mit einem ersten Anschluss 101a, 101b der Pumpen-Ventil-Anordnung 160 in Verbindung. Die Druckräume 133, 134 nehmen nicht näher bezeichnete Rückstellfedern auf, die die Kolben 131, 132 bei unbetätigtem Hauptbremszylinder 100 in einer Ausgangslage positionieren.

Zur Erfassung einer Betätigung des Hauptbremszylinders 100 sind vorteilhafterweise zwei unabhängige Wegsensoren 138 und 139 vorgesehen, die z.B. eine Verschiebung der Kolben 131 und 132 erfassen, und deren Signale über eine Signal- oder Datenleitung an die elektronische Steuer- und Regeleinheit 130 übermittelt werden.

Je Kreis 137a, 137b des Hauptbremszylinders 110 umfasst die Pumpen-Ventil-Anordnung 160 einen ersten Anschluss 101a, 101b, welcher mit dem zugeordneten Druckraum 133, 134 verbunden ist, einen zweiten Anschluss 102a, 102b, welcher mit dem Druckmittelvorratsbehälter 140 verbunden ist, und einen Ausgangsdruckanschluss 103a, 103b, welcher mit der Druckmodulationseinrichtung 150 verbunden ist.

Druckmodulationseinrichtung 150 umfasst beispielsgemäß je Radbremse 151a-151d ein Einlassventil 152a-152d und ein Auslassventil 153a-153d, die paarweise über Mittenanschlüsse hydraulisch zusammengeschaltet und an die Radbremse 151a-151d angeschlossen sind. Die Eingangsanschlüsse der Einlassventile 152a-152d werden über die Ausgangsdruckanschlüsse 103a, 103b der Pumpen-Ventil-Anordnung 160 mit einem Druck je Bremskreis I, II versorgt. Den Einlassventilen 152a-152d ist jeweils ein nicht näher bezeichnetes, zur Pumpen-Ventil-Anordnung 160 hin öffnendes Rückschlagventil parallel geschaltet. Die Ausgangsanschlüsse der Auslassventile 153a, 153b, 153c, 153d sind je Bremskreis über eine zugeordnete Rücklaufleitung 154a, 154b mit der Pumpen-Ventil-Anordnung 160 und weiter über den jeweiligen zweiten Anschluss 102a, 102b mit dem Druckmittelvorratsbehälter 140 verbunden. Eine andere Ventilanordnung in der Druckmodulationseinrichtung 150 ist grundsätzlich möglich.

Für jeden Bremskreis 137a, 137b bzw. I, II umfasst die Pumpen-Ventil-Anordnung 160 eine Anordnung 161a, 161b, welche der beispielsgemäßen Anordnung der Fig. 1 entspricht, d.h. mit einer Pumpe 104a, 104b mit einer ersten Saugseite 141a, 141b und einer ersten Druckseite 142a, 142b, einem ersten elektrisch betätigbaren Ventil (Druckanhebungsventil) 105a, 105, einem zweiten elektrisch betätigbaren Ventil 106a, 106b (Hauptzylinder-Abbau-Freigabeventil), einem dritten elektrisch betätigbaren Ventil 108a, 108b (Staudruckventil), einem vierten elektrisch betätigbaren Ventil 107a, 107b (Hauptbremszylinder-Abbau-Dosierventil), einem Pumpen-druckseitigen Rückschlagventil 109a, 109b , einem dem ersten Ventil parallel geschaltetem Rückschlagventil 110a, 110b sowie zwei Drucksensoren 120a, 121a bzw. 120b, 121b.

Der Aufbau sowie die Funktionsweise der beispielsgemäßen Anordnung 161a, 161b wurden bereits oben, entsprechend der Beschreibung zu Fig. 1, erläutert und soll daher nicht nochmals wiederholt werden.

Die beiden Pumpen 104a und 104b werden beispielsgemäß von einem Elektromotor M gemeinsam angetrieben.

Um eine Antiblockier-Regelung (ABS: Anti-Blockier-System) ausführen zu können, umfasst die Bremsanlage beispielsgemäß je Rad des Kraftfahrzeugs einen Raddrehzahlsensor 155a-155d. Die Signale der Raddrehzahlsensoren 155a-155d werden der Steuer- und Regeleinheit 130 zugeführt und die Raddrehzahlsensoren 155a-155d werden vorteilhafterweise von der Steuer- und Regeleinheit 130 mit elektrischer Energie versorgt.

Um eine Fahrdynamik-Regelung (ESC: electronic stability control) oder stabilisierende Assistenzfunktion ausführen zu können, umfasst die Bremsanlage beispielsgemäß weiterhin eine Sensoreinrichtung 156 zur Erfassung von Fahrdynamikgrößen sowie des Lenkwinkels oder Lenkradwinkels, deren Signale über eine Signal- oder Datenleitung der Steuer- und Regeleinheit 130 zugeführt werden. Sensoreinrichtung 156 wird vorteilhafterweise von der Steuer- und Regeleinheit 130 mit elektrischer Energie versorgt.

Sensoreinrichtung 156 umfasst beispielsgemäß einen Sensor zur Erfassung der Gierrate des Kraftfahrzeugs und einen Sensor zur Erfassung der Querbeschleunigung des Kraftfahrzeugs. Vorteilhafterweise umfasst Sensoreinrichtung 156 auch einen Sensor zur Erfassung der Längsbeschleunigung des Kraftfahrzeugs. Außerdem umfasst die Sensoreinrichtung wenigstens einen Sensor zur Erfassung des Fahrzeuglenkungszustands, d.h. beispielweise des Lenkwinkels (Radeinschlagwinkel) oder des damit gekoppelten Lenkradwinkels.

Die Bremsanlage gemäß dem ersten Ausführungsbeispiel kommt ohne einen zwischen dem Bremspedal und dem Hauptbremszylinder angeordneten Bremskraftverstärker aus, da die beiden, von dem unverstärkt bremspedalbetätigen Hauptbremszylinder 100 abgegebenen Kreisdrücke (Eingangsdrücke) mittels der Pumpen-Ventil-Anordnung 160 verstärkt werden können, bevor sie auf die Einlassventile 152a-152d der Druckmodulationseinrichtung 150 ausgegeben werden. Der Druckverstärker (d.h. die Pumpen-Ventil-Anordnung 160 bzw. die Anordnung 161a, 161b) ist derart aufgebaut, dass er nicht nur die Eingangsdruckniveaus auf darüber liegende Ausgangsdruckniveaus anheben kann, sondern darüber hinaus auch in der Lage ist, das Hauptbremszylinderdruckmittelvolumen aktiv auf- und abzubauen. Diese Funktion wird beispielsweise für Rekuperationsbremsungen benötigt.

Die beispielsgemäße Bremsanlage kombiniert einen einfachen Aufbau mit umfänglichen Funktionen - d.h. Druckverstärkung, Rekuperationsbremsung, Aktivbremsung, Pedalwegbeeinflussung sowie ABS-, ESC- und ACC-Funktionalität (ACC: active cruise control).

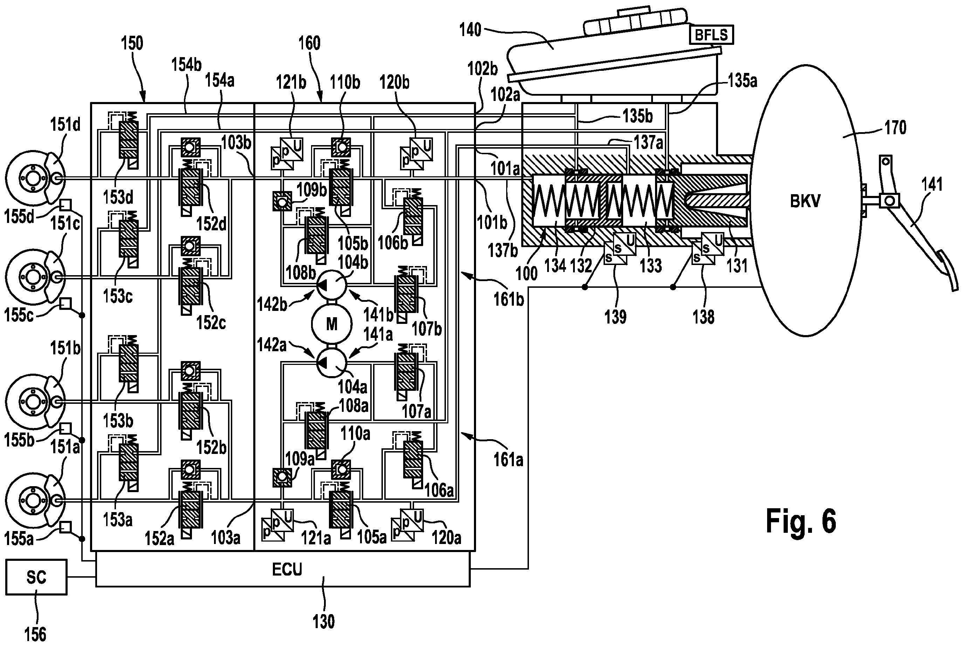

Das in Fig. 6 schematisch dargestellte zweite Ausführungsbeispiel einer erfindungsgemäßen Bremsanlage entspricht bezüglich dem Aufbau des Hauptbremszylinders 100, dem Druckmittelvorratsbehälter 140, der Pumpen-Ventil-Anordnung 160, der Druckmodulationseinrichtung 150 und der elektronischen Steuer- und Regeleinheit 130 dem ersten Ausführungsbeispiel, wobei zusätzlich zum ersten Ausführungsbeispiel dem Hauptbremszylinder 100 ein Bremskraftverstärker 170 vorgeschaltet ist. Der Bremskraftverstärker kann ein Vakuumbremskraftverstärker, ein hydraulischer oder ein elektrischer Bremskraftverstärker sein. Die Bremsanlage stellt somit bei inaktiver Pumpen-Ventil-Anordnung 160 eine Hilfskraft-Bremsanlage dar, wenngleich die erfindungsgemäße Pumpen-Ventil-Anordnung auch dadurch charakterisiert werden kann, dass sie in der Lage ist, eine "Hilfskraftbremse" mit Erhalt der Volumenbilanz als eine "Fremdkraftbremse" mit "fahrerfremd" - d.h. nicht vom Fahrer direkt über das Pedal festgelegten Drücken und Volumenverschiebungen zu betreiben.

Zur Durchführung einer Rekuperationsbremsung wird bei einer Bremspedalbetätigung mit Hilfe der Einlassventile 152a-152d der Druckmodulationseinrichtung 150 ein Druckaufbau in den Radbremsen 101a-151d verhindert oder reduziert. Die Bremswirkung wird ganz oder teilweise vom Fahrzeugantrieb übernommen. Um trotz reduziertem Radbremsen-Druckmittelvolumen das gewohnte Bremspedalgefühl zu erhalten, wird die Pumpen-Ventil-Anordnung 160 mit einer der beispielsgemäßen Anordnungen 161a, 161b eingesetzt, die wie bereits erwähnt eine Hauptbremszylindervolumenbeeinflussung ermöglichen.

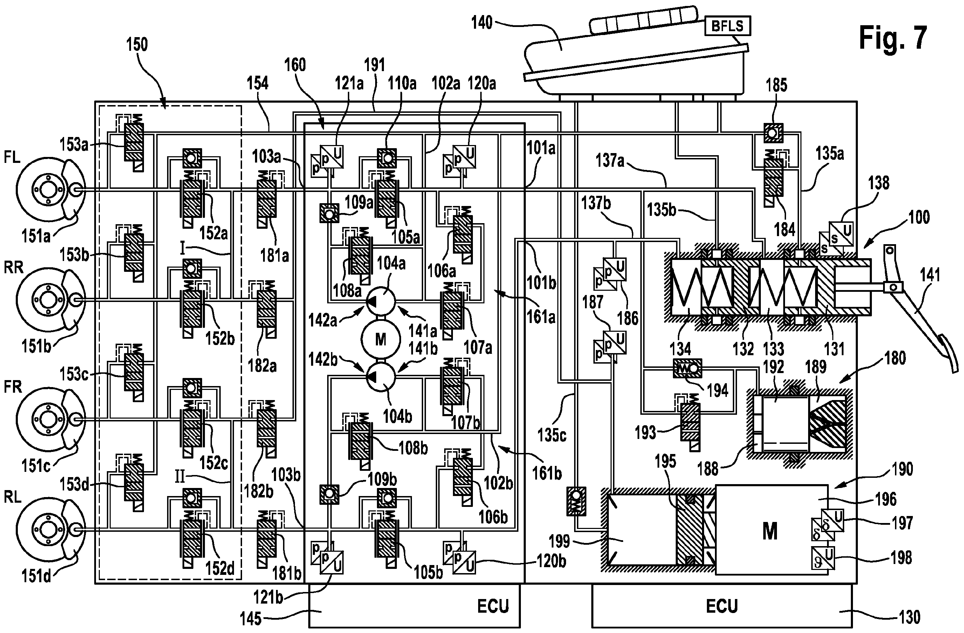

Das in Fig. 7 schematisch dargestellte dritte Ausführungsbeispiel einer erfindungsgemäßen Bremsanlage umfasst eine Simulator-Bremsanlage mit im Wesentlichen einem Hauptbremszylinder 100, welcher durch ein Bremspedal 141 über eine Druckstange direkt betätigbar ist, einem dem Hauptbremszylinder 100 zugeordneten unter Atmosphärendruck stehenden Druckmittelvorratsbehälter 140, einer mit dem Hauptbremszylinder 100 zusammenwirkenden (Weg)Simulationseinrichtung 180, einer elektrisch steuerbaren Druckbereitstellungseinrichtung 190, einer elektrisch steuerbaren Druckmodulationseinrichtung 150 zum Einstellen radindividueller Bremsdrücke für die Radbremsen 151a-151d und einer ersten elektronischen Steuer- und Regeleinheit 130, welche zur Ansteuerung der Druckbereitstellungseinrichtung 190 und der Druckmodulationseinrichtung 150 ausgebildet ist, sowie mit einer elektrisch steuerbaren Pumpen-Ventil-Anordnung 160 als Zusatzmodul, das je Kreis eine beispielsgemäße Anordnung 161a, 161b enthält und der eine zweite elektronische Steuer- und Regeleinheit 145 zugeordnet ist.

Druckmodulationseinrichtung 150 entspricht im Wesentlichen der Druckmodulationseinrichtung des ersten Ausführungsbeispiels mit radindividuellen Einlassventilen 152a-152d und Auslassventilen 153a-153d.

Die Eingangsanschlüsse der Einlassventile 152a-152d werden mittels Bremskreisversorgungsleitungen I, II mit Drücken versorgt, die in einer ersten Betriebsart (z.B. "Brake-by-Wire") aus einem Systemdruck abgeleitet werden, der in einer an die Druckbereitstellungseinrichtung 190 angeschlossenen Systemdruckleitung 191 vorliegt. Die hydraulische Verbindung zwischen der Systemdruckleitung 191 und der Bremskreisversorgungsleitung I, II ist mittels eines, vorteilhafterweise stromlos geschlossenen, Zuschaltventils 182a, 182b je Bremskreis trennbar. In einer zweiten Betriebsart (z.B. einer verstärkten Rückfallbetriebsart) sind die Bremskreisversorgungsleitungen I, II über ein, vorteilhafterweise stromlos offenes, Trennventil 181a, 181b je Bremskreis mit den Ausgangsdruckanschlüssen 103a, 103b der Anordnungen 161a, 161b verbunden. Die Ausgangsanschlüsse der Auslassventile 153a-153d sind über eine gemeinsame Rücklaufleitung 154 mit dem Druckmittelvorratsbehälter 140 verbunden.

Beispielsgemäß sind die Radbremsen 151a und 151b dem linken Vorderrad FL und dem rechten Hinterrad RR und der Bremskreisversorgungsleitung I sowie die Radbremsen 151c und 151d dem rechten Vorderrad FR und dem linken Hinterrad RL und der Bremskreisversorgungsleitung II zugeordnet. Andere Bremskreisaufteilungen sind denkbar.

Der zweikreisige Hauptbremszylinder 100 umfasst zwei hintereinander angeordnete Kolben 131, 132, die zwei hydraulische Druckräume 133, 134 begrenzen. Der erste Kolben 131 ist mechanisch mit dem Bremspedal 141 gekoppelt und wird direkt vom Fahrzeugführer, ohne Zwischenschaltung eines Bremskraftverstärkers betätigt. Den Druckräumen 133, 134 sind entsprechend dem ersten Ausführungsbeispiel der Fig. 3 Druckausgleichsleitungen 135a, 135b zum Druckmittelvorratsbehälter 140 zugeordnet. Ebenso steht jeder der Druckräume 133 bzw. 134 mittels einer hydraulischen Verbindung 137a bzw. 137b mit dem ersten Anschluss 101a, 101b der Pumpen-Ventil-Anordnung 160 bzw. der Anordnung 161a, 161b in Verbindung.

In der Druckausgleichsleitung 135a ist eine Parallelschaltung eines stromlos offenen (SO-) Diagnoseventils 184 mit einem zum Druckmittelvorratsbehälter 140 hin schließenden Rückschlagventil 185 enthalten.

Zur Erfassung einer Betätigung des Hauptbremszylinders 100 ist ein, vorteilhafterweise redundant ausgeführter, Wegsensor 138, der z.B. eine Verschiebung des Kolben 131 und/oder 132 erfasst.

Ein an den Leitungsabschnitt 137b angeschlossener Drucksensor 186 erfasst den im Druckraum 134 durch ein Verschieben des zweiten Kolbens 132 aufgebauten Druck.

Simulationseinrichtung 180 ist hydraulisch an den Hauptbremszylinder 100 ankoppelbar und besteht im Wesentlichen aus einer Simulatorkammer 188, einer Simulatorfederkammer 189 sowie einem die beiden Kammern voneinander trennenden Simulatorkolben 192. Simulatorkolben 192 stützt sich durch ein in Simulatorfederkammer 188 angeordnetes elastisches Element (z.B. eine Feder), welches vorteilhafterweise vorgespannt ist, am Gehäuse ab. Die Simulatorkammer 188 ist mittels eines elektrisch betätigbaren Simulatorfreigabeventils 193 mit dem Druckraum 133 des Hauptbremszylinders 100 verbindbar. Bei Vorgabe einer Pedalkraft und aktiviertem Simulatorfreigabeventil 193 strömt Druckmittel vom Hauptbremszylinderdruckraum 133 in die Simulatorkammer 188. Ein hydraulisch antiparallel zum Simulatorfreigabeventil 193 angeordnetes Rückschlagventil 194 ermöglicht unabhängig vom Schaltzustand des Simulatorfreigabeventils 193 ein weitgehend ungehindertes Zurückströmen des Druckmittels von der Simulatorkammer 188 zum Hauptbremszylinderdruckraum 133.

Die elektrisch steuerbare Druckbereitstellungseinrichtung 190 ist als eine hydraulische Zylinder-Kolben-Anordnung bzw. ein einkreisiger elektrohydraulischer Aktuator ausgebildet, dessen Kolben 195 von einem schematisch angedeuteten Elektromotor 196 unter Zwischenschaltung eines ebenfalls schematisch dargestellten Rotations-Translationsgetriebes betätigbar ist. Ein der Erfassung der Rotorlage des Elektromotors 196 dienender, lediglich schematisch angedeuteter Rotorlagensensor ist mit dem Bezugszeichen 197 bezeichnet. Zusätzlich kann auch ein Temperatursensor 198 zum Erfassen der Temperatur der Motorwicklung verwendet werden. Der Kolben 195 begrenzt einen Druckraum 199, welcher mit der Systemdruckleitung 191 verbunden ist. Ein Nachsaugen von Druckmittel in den Druckraum 199 ist durch ein Zurückfahren des Kolbens 195 bei geschlossenen Zuschaltventilen 182a, 182b möglich, indem Druckmittel aus dem Behälter 140 über eine Nachsaugleitung 135c mit einem in Strömungsrichtung zum Aktuator 190 öffnenden, nicht näher bezeichneten Rückschlagventil in den Akuatordruckraum 199 strömen kann. Zum Erfassen des in der Systemdruckleitung 191 herrschenden Druckes ist ein vorzugsweise redundant ausgeführter Drucksensor 187 vorgesehen.

Für jeden Bremskreis 137a, 137b bzw. I, II umfasst die Pumpen-Ventil-Anordnung 160 eine Anordnung 161a, 161b, welche der beispielsgemäßen Anordnung der Fig. 1 entspricht, d.h. mit einer Pumpe 104a, 104b mit einer ersten Saugseite 141a, 141b und einer ersten Druckseite 142a, 142b, einem ersten elektrisch betätigbaren Ventil (Druckanhebungsventil) 105a, 105, einem zweiten elektrisch betätigbaren Ventil 106a, 106b (Hauptzylinder-Abbau-Freigabeventil), einem dritten elektrisch betätigbaren Ventil 108a, 108b (Staudruckventil), einem vierten elektrisch betätigbaren Ventil 107a, 107b (Hauptbremszylinder-Abbau-Dosierventil), einem Pumpen-druckseitigen Rückschlagventil 109a, 109b , einem dem ersten Ventil parallel geschaltetem Rückschlagventil 110a, 110b sowie zwei Drucksensoren 120a, 121a bzw. 120b, 121b.

Je Kreis 137a, 137b umfasst die Pumpen-Ventil-Anordnung 160 den ersten Anschluss 101a, 101b, welcher mit dem zugeordneten Druckraum 133, 134 verbunden ist, und den Ausgangsdruckanschluss 103a, 103b, welcher über das Trennventil 181a, 181b mit der Druckmodulationseinrichtung 150 verbunden ist. Die zweiten Anschlüsse 102a, 102b der Anordnungen 161a, 161b sind mit der Rücklaufleitung 154 und somit mit dem Druckmittelvorratsbehälter 140 verbunden.

Die hydraulischen Komponenten der Bremsanlage sind beispielsgemäß in einer hydraulischen Einheit angeordnet, wobei die Pumpen-Ventil-Anordnung 160 ein Untermodul bildet.

Durch Nutzung der Pumpen-Ventil-Anordnung 160 kann auf einen Nachsaugzyklus der Druckbereitstellungseinrichtung 190 verzichtet werden. Zum Wiederauffüllen der Druckraums 199 der Druckbereitstellungseinrichtung 190 wird an wenigstens einem der Ausgangsdruckanschlüsse 103a, 103b der Anordnungen 161a, 161b mit Hilfe der Pumpenanordnungen(en) ein hoher Druck aufgebaut. Dann wird das entsprechende Trennventil 181a, 181b geöffnet, wodurch Druckmittel über das geöffnete Zuschaltventil 182a, 182b in den Druckraum 199 strömt. So ist es möglich, Druckmittel, das durch Radbremsdruckregelungsaktivitäten über die Auslassventile 153a-153d zum Druckmittelvorratsbehälter 140 abgegeben wurde, zu ersetzen, indem mittels der Pumpen-Ventil-Anordnung 160 ein äquivalentes Druckmittelvolumen vom Druckmittelvorratsbehälter in den Druckraum 199 gepumpt wird. Damit ist im Gegensatz zu einer entsprechenden Simulator-Bremsanlage ohne Pumpen-Ventil-Anordnung 160 eine unterbrechungsfreie ABS- und Stabilitätsregelung möglich.

Der Betrieb der Simulator-Bremsanlage mit Pumpen-Ventil-Anordnung 160 ist besonders sicher, weil bei einem Ausfall der Druckbereitstellungseinrichtung 190 über die Pumpen-Ventil-Anordnung 160 die volle Funktion der Bremsanlage aufrecht erhalten werden kann. Auch bei einer Leckage - beispielsweise in einer Radbremsleitung - ist es günstig, auf den Betrieb über die Pumpen-Ventil-Anordnung 160 umzuschalten, weil diese zweikreisig ausgeführt ist, so dass der von der Leckage nicht betroffene Bremskreis in vollem Umfang weiter genutzt werden kann. Außerdem stellt die Pumpen-Ventil-Anordnung 160 die technischen Voraussetzungen zur Verfügung, um das Bremspedal 141 aktiv zu beeinflussen, was bei einer entsprechenden Simulator-Bremsanlage ohne Pumpen-Ventil-Anordnung 160 nur sehr eingeschränkt möglich ist.

Die als Zusatzmodul ausgeführte Pumpen-Ventil-Anordnung des Ausführungsbeispiels der Fig. 5 ist weitgehend gleich zu der Pumpen-Ventil-Anordnung der in Fig. 4 vorgeschlagenen Bremsanlage. Daraus resultieren Vorteile bezüglich der Entwicklung und Produktion von Bremsanlagen.

## Patentansprüche

1. Anordnung für eine hydraulische Kraftfahrzeug-Bremsanlage mit einem ersten Anschluss (1), welcher mit einem Druckraum eines Hauptbremszylinders hydraulisch verbunden ist, einem zweiten Anschluss (2), welcher mit einem, insbesondere unter Atmosphärendruck stehenden, Druckmittelvorratsbehälter hydraulisch verbunden ist, und einem Ausgangsdruckanschluss (3), welcher mit einer Druckmodulationseinrichtung hydraulisch verbunden ist, umfassend
• eine Pumpenanordnung (4, 14, 24) mit zumindest einer ersten Saugseite (41, 241) einer ersten Pumpe (50, 25), wobei die erste Saugseite direkt, ohne Zwischenschaltung eines Ventils mit dem zweiten Anschluss (2) hydraulisch verbunden ist (12b, 13),
• eine hydraulische Verbindung (11) zwischen dem ersten Anschluss (1) und dem Ausgangsdruckanschluss (3), in welcher ein stromlos offen ausgeführtes, analog ansteuerbares erstes Ventil (5) angeordnet ist, und
• eine hydraulische Verbindung (12) zwischen dem ersten Anschluss (1) und dem zweiten Anschluss (2), in welcher ein stromlos geschlossen ausgeführtes zweites Ventil (6) angeordnet ist,
**dadurch gekennzeichnet, dass** die der ersten Saugseite zugeordnete erste Druckseite (42, 242) der Pumpenanordnung über ein stromlos offen ausgeführtes, analog ansteuerbares drittes Ventil (8, 8') mit der ersten Saugseite (41, 241) hydraulisch verbunden ist.

2. Anordnung nach Anspruch 1, **dadurch gekennzeichnet, dass** an die erste Druckseite (42, 242) der Pumpenanordnung ein in ihrer Volumenabgaberichtung öffnendes Rückschlagventil (9) angeschlossen ist.

3. Anordnung nach Anspruch 2, **dadurch gekennzeichnet, dass** die Pumpenanordnung durch die einzelne erste Pumpe (50, 14) mit der ersten Saugseite (41) und der ersten Druckseite (42) gebildet wird, wobei die Volumenabgabeseite des Rückschlagventils (9) mit dem Ausgangsdruckanschluss (3) verbunden ist.

4. Anordnung nach Anspruch 3, **dadurch gekennzeichnet, dass** in der hydraulischen Verbindung (12) zwischen dem ersten Anschluss (1) und dem zweiten Anschluss (2), in welcher das zweite Ventil (6) angeordnet ist, ein stromlos offen ausgeführtes, analog ansteuerbares viertes Ventil (7) in Reihe zu dem zweiten Ventil (6) angeordnet ist.

5. Anordnung nach Anspruch 1 oder 2, **dadurch gekennzeichnet, dass** die Pumpenanordnung (24) durch die erste Pumpe (25) mit der ersten Saugseite (241) und der ersten Druckseite (242) und eine zweite Pumpe (26) mit einer zweiten Saugseite (243) und einer zweiten Druckseite (244) gebildet wird.

6. Anordnung nach Anspruch 5, **dadurch gekennzeichnet, dass** die zweite Pumpe (26) dem ersten Ventil (5) parallel geschaltet ist, wobei die zweite Saugseite (243) mit dem ersten Anschluss (1) und die zweite Druckseite (244) mit dem Ausgangsdruckanschluss (3) verbunden ist.

7. Anordnung nach Anspruch 5 oder 6, **dadurch gekennzeichnet, dass** der erste Anschluss (1) über das zweite Ventil (6) mit der ersten Druckseite (242) verbindbar ist.

8. Anordnung nach einem der Ansprüche 5 bis 7, wenn rückbezogen auf Anspruch 2, **dadurch gekennzeichnet, dass** die Volümenabgabeseite des Rückschlagventils (9) mit dem ersten Anschluss (1) verbunden ist.

9. Anordnung nach einem der Ansprüche 5 bis 7, wenn rückbezogen auf Anspruch 2, **dadurch gekennzeichnet, dass** die Volumenabgabeseite des Rückschlagventils (9) mit dem Ausgangsdruckanschluss (3) verbunden ist.

10. Anordnung nach einem der Ansprüche 1 bis 9, **dadurch gekennzeichnet, dass** eine erste Druckerfassungseinrichtung (20), welche den Druck am ersten Anschluss (1) erfasst, und eine zweite Druckerfassungseinrichtung (21), welche den Druck am Ausgangsdruckanschluss (3) erfasst, vorgesehen sind.

11. Anordnung nach einem der Ansprüche 1 bis 10, **dadurch gekennzeichnet, dass** das zweite Ventil (6) als ein Schaltventil ausgeführt ist.

12. Bremsanlage für ein Kraftfahrzeug zur Betätigung von hydraulisch betätigbaren Radbremsen (151a-151d), mit
• einem bremspedalbetätigbaren Hauptbremszylinder (100) mit Druckräumen (133, 134), wobei jedem Druckraum zumindest eine Radbremse (151a, 151b; 151c, 151d) zugeordnet ist,
• einem dem Hauptbremszylinder zugeordneten unter Atmosphärendruck stehenden Druckmittelvorratsbehälter (140),
• einer elektrisch steuerbaren Druckmodulationseinrichtung (150) zum Einstellen radindividueller Bremsdrücke mit zumindest einem Einlassventil (152a-152d), und insbesondere einem Auslassventil (153a-153d), für jede Radbremse (151a-151d), und
• einer elektrisch steuerbaren Pumpen-Ventil-Anordnung (160),
welche zumindest eine Anordnung (161a, 161b) mit einem ersten Anschluss (101a, 101b), welcher mit einem der Druckräume (133, 134) hydraulisch verbunden ist, einem zweiten Anschluss (102a, 102b), welcher mit dem Druckmittelvorratsbehälter (140) hydraulisch verbunden ist, und einem Ausgangsdruckanschluss (103a, 103b), welcher mit dem dem Druckraum (133, 134) zugeordneten Einlassventil (152a, 152b; 152c, 152d) hydraulisch verbunden ist, umfasst, wobei die Anordnung eine Pumpenanordnung mit zumindest einer ersten Saugseite (141a, 141b) einer ersten Pumpe (104a, 104b), welche direkt, ohne Zwischenschaltung eines Ventils mit dem zweiten Anschluss (102a, 102b) hydraulisch verbunden ist, eine hydraulische Verbindung zwischen dem ersten Anschluss und dem Ausgangsdruckanschluss, in welcher ein stromlos offen ausgeführtes, analog ansteuerbares erstes Ventil (105a, 105b) angeordnet ist, und eine hydraulische Verbindung zwischen dem ersten Anschluss und dem zweiten Anschluss, in welcher ein stromlos geschlossen ausgeführtes zweites Ventil (106a, 106b) angeordnet ist, umfasst, **dadurch gekennzeichnet, dass** die der ersten Saugseite zugeordnete erste Druckseite (142a, 142b) der Anordnung (161a, 161b) über ein stromlos offen ausgeführtes, analog ansteuerbares drittes Ventil (108a, 108b) mit der ersten Saugseite hydraulisch verbunden ist.

13. Bremsanlage nach Anspruch 12, **dadurch gekennzeichnet, dass** dem Hauptbremszylinder (100) ein Bremskraftverstärker (170) vorgeschaltet ist.

14. Bremsanlage nach Anspruch 12, **dadurch gekennzeichnet, dass** die Bremsanlage eine weitere elektrisch steuerbare Druckbereitstellungseinrichtung (190) umfasst, welche insbesondere durch eine Zylinder-Kolben-Anordnung gebildet wird, deren Kolben durch einen elektromechanischen Aktuator betätigbar ist, wobei die Bremsanlage in einer "Brake-by-wire"-Betriebsart sowohl vom Fahrzeugführer als auch unabhängig vom Fahrzeugführer ansteuerbar ist.

15. Bremsanlage nach Anspruch 14, **dadurch gekennzeichnet, dass** eine erste, der Druckbereitstellungseinrichtung (190) und der Druckmodulationseinrichtung (150) zugeordnete elektronische Steuer- und Regeleinheit (130) und eine zweite, der Pumpen-Ventil-Anordnung (160) zugeordnete elektronische Steuer- und Regeleinheit (145) vorgesehen sind.

16. Bremsanlage nach einem der Ansprüche 12 bis 15, **dadurch gekennzeichnet, dass** die Anordnung (161a, 161b) die zusätzlichen Merkmale eines der Ansprüche 2 bis 11 aufweist.

17. Bremsanlage nach einem der Ansprüche 12 bis 15, **dadurch gekennzeichnet, dass** die Pumpen-Ventil-Anordnung (160) je Druckraum (133, 134) des Hauptbremszylinders (100) eine derartige Anordnung (161a, 161b) umfasst.

18. Bremsanlage nach Anspruch 17, **dadurch gekennzeichnet, dass** jede der Anordnungen (161a, 161b) die zusätzlichen Merkmale eines der Ansprüche 2 bis 11 aufweist.

## Claims

1. Assembly for a hydraulic motor-vehicle brake system, having a first port (1) which is hydraulically connected to a pressure chamber of a brake master cylinder, a second port (2) which is hydraulically connected to a pressure medium reservoir, in particular a pressure medium reservoir under atmospheric pressure, and an output pressure port (3), which is hydraulically connected to a pressure modulation device, comprising
• a pump assembly (4, 14, 24) having at least one first suction side (41, 241) of a first pump (50, 25), wherein the first suction side is directly hydraulically connected (12b, 13) to the second port (2) without the interposition of a valve,
• a hydraulic connection (11) between the first port (1) and the output pressure port (3), in which hydraulic connection a first valve (5) is arranged, which is designed to be open when deenergized and is controllable in an analog manner, and
• a hydraulic connection (12) between the first port (1) and the second port (2), in which hydraulic connection a second valve (6) is arranged, which is designed to be closed when deenergized,
**characterized in that** the first pressure side (42, 242) of the pump assembly, which is assigned to the first suction side, is hydraulically connected to the first suction side (41, 241) by means of a third valve (8, 8'), which is designed to be open when deenergized and is controllable in an analog manner.

2. Assembly according to Claim 1, **characterized in that** a check valve (9) is connected to the first pressure side (42, 242) of the pump assembly, said check valve opening in the volume discharge direction of said pump assembly.

3. Assembly according to Claim 2, **characterized in that** the pump assembly is formed by the single first pump (50, 14) having the first suction side (41) and the first pressure side (42), wherein the volume discharge side of the check valve (9) is connected to the output pressure port (3).

4. Assembly according to Claim 3, **characterized in that** a fourth valve (7), which is designed to be open when deenergized and is controllable in an analog manner, is arranged in the hydraulic connection (12) between the first port (1) and the second port (2), in which connection the second valve (6) is arranged, which fourth valve is arranged in series with the second valve (6).

5. Assembly according to Claim 1 or 2, **characterized in that** the pump assembly (24) is formed by the first pump (25) having the first suction side (241) and the first pressure side (242) and a second pump (26) having a second suction side (243) and a second pressure side (244) .

6. Assembly according to Claim 5, **characterized in that** the second pump (26) is connected in parallel with the first valve (5), wherein the second suction side (243) is connected to the first port (1) and the second pressure side (244) is connected to the output pressure port (3).

7. Assembly according to Claim 5 or 6, **characterized in that** the first port (1) can be connected to the first pressure side (242) by means of the second valve (6).

8. Assembly according to one of Claims 5 to 7, if referred back to Claim 2, **characterized in that** the volume discharge side of the check valve (9) is connected to the first port (1).

9. Assembly according to one of Claims 5 to 7, if referred back to Claim 2, **characterized in that** the volume discharge side of the check valve (9) is connected to the output pressure port (3).

10. Assembly according to one of Claims 1 to 9, **characterized in that** a first pressure detection device (20), which detects the pressure at the first port (1), and a second pressure detection device (21), which detects the pressure at the output pressure port (3), are provided.

11. Assembly according to one of Claims 1 to 10, **characterized in that** the second valve (6) is embodied as a switching valve.

12. Brake system for a motor vehicle for actuating hydraulically actuable wheel brakes (151a-151d), having
• a brake master cylinder (100) actuable by means of a brake pedal and having pressure chambers (133, 134), wherein each pressure chamber is assigned at least one wheel brake (151a, 151b; 151c, 151d),
• a pressure medium reservoir (140) under atmospheric pressure assigned to the brake master cylinder,
• an electrically controllable pressure modulation device (150) for setting wheel-specific brake pressures, having at least one inlet valve (152a-152d) and, in particular, one outlet valve (153a-153d) for each wheel brake (151a-151d), and
• an electrically controllable pump-valve assembly (160), which pump-valve assembly (160) comprises at least one assembly (161a, 161b) having a first port (101a, 101b) which is hydraulically connected to one of the pressure chambers (133, 134), a second port (102a, 102b) which is hydraulically connected to the pressure medium reservoir (140), and an output pressure port (103a, 103b) which is hydraulically connected to the inlet valve (152a, 152b; 152c, 152d) assigned to the pressure chamber (133, 134), wherein the assembly comprises a pump assembly having at least one first suction side (141a, 141b) of a first pump (104a, 104b), which first suction side is directly hydraulically connected to the second port (102a, 102b) without the interposition of a valve, a hydraulic connection between the first port and the output pressure port, in which hydraulic connection a first valve (105a, 105b) is arranged, which is designed to be open when deenergized and is controllable in an analog manner, and a hydraulic connection between the first port and the second port, in which hydraulic connection a second valve (106a, 106b) is arranged, which is designed to be closed when deenergized, **characterized in that** the first pressure side (142a, 142b) of the assembly (161a, 161b), which is assigned to the first suction side, is hydraulically connected to the first suction side by means of a third valve (108a, 108b), which is designed to be open when deenergized and is controllable in an analog manner.

13. Brake system according to Claim 12, **characterized in that** a brake booster (170) is arranged upstream of the brake master cylinder (100).

14. Brake system according to Claim 12, **characterized in that** the brake system comprises another electrically controllable pressure supply device (190), which is formed, in particular, by a cylinder-piston assembly, the piston of which can be actuated by an electromechanical actuator, wherein, in a "brake-by-wire" operating mode, the brake system can be controlled either by the vehicle driver or independently of the vehicle driver.

15. Brake system according to Claim 14, **characterized in that** a first electronic open-loop and closed-loop control unit (130), assigned to the pressure supply device (190) and the pressure modulation device (150), and a second electronic open-loop and closed-loop control unit (145), assigned to the pump-valve assembly (160), are provided.

16. Brake system according to one of Claims 12 to 15, **characterized in that** the assembly (161a, 161b) has the additional features of one of Claims 2 to 11.

17. Brake system according to one of Claims 12 to 15, **characterized in that** the pump-valve arrangement (160) comprises an assembly (161a, 161b) of said type for each pressure chamber (133, 134) of the brake master cylinder (100) .

18. Brake system according to Claim 17, **characterized in that** each of the assemblies (161a, 161b) has the additional features of one of Claims 2 to 11.

## Revendications

1. Dispositif pour un système de freinage hydraulique de véhicule automobile muni d'un premier raccord (1), qui est raccordé hydrauliquement à une chambre de pression d'un maître-cylindre, d'un deuxième raccord (2), qui est raccordé hydrauliquement à un réservoir de stockage de fluide sous pression, se trouvant en particulier à la pression atmosphérique, et d'un raccord de pression de sortie (3), qui est raccordé hydrauliquement à un dispositif de modulation de la pression, comprenant
• un dispositif de pompe (4, 14, 24) avec au moins un premier côté d'aspiration (41, 241) d'une première pompe (50, 25), dans lequel le premier côté d'aspiration est raccordé directement (12b, 13), sans interposition d'une soupape, hydrauliquement au deuxième raccord (2),
• une liaison hydraulique (11) entre le premier raccord (1) et le raccord de pression de sortie (3), dans laquelle une première soupape (5) du type ouverte sans courant et à commande analogique est disposée, et
• une liaison hydraulique (12) entre le premier raccord (1) et le deuxième raccord (2), dans laquelle une deuxième soupape (6) du type fermée sans courant est disposée,
**caractérisé en ce que** le premier côté de refoulement (42, 242) du dispositif de pompe associé au premier côté d'aspiration est raccordé hydrauliquement au premier côté d'aspiration (41, 241) par une troisième soupape (8, 8') du type ouverte sans courant à commande analogique.

2. Dispositif selon la revendication 1, **caractérisé en ce qu'**une soupape anti-retour (9) s'ouvrant dans sa direction de décharge de volume est raccordée au premier côté de refoulement (42, 242) du dispositif de pompe.

3. Dispositif selon la revendication 2, **caractérisé en ce que** le dispositif de pompe est formé par la première pompe individuelle (50, 14) avec le premier côté d'aspiration (41) et le premier côté de refoulement (42), dans lequel le côté de décharge de volume de la soupape anti-retour (9) est raccordé au raccord de pression de sortie (3).

4. Dispositif selon la revendication 3, **caractérisé en ce qu'**une quatrième soupape (7) du type ouverte sans courant à commande analogique est disposée en série avec la deuxième soupape (6) dans la liaison hydraulique (12) entre le premier raccord (1) et le deuxième raccord (2), dans laquelle la deuxième soupape (6) est disposée.

5. Dispositif selon la revendication 1 ou 2, **caractérisé en ce que** le dispositif de pompe (24) est formé par la première pompe (25) avec le premier côté d'aspiration (241) et le premier côté de refoulement (242) et une deuxième pompe (26) avec un deuxième côté d'aspiration (243) et un deuxième côté de refoulement (244) .

6. Dispositif selon la revendication 5, **caractérisé en ce que** la deuxième pompe (26) est montée en parallèle avec la première soupape (5), dans lequel le deuxième côté d'aspiration (243) est raccordé au premier raccord (1) et le deuxième côté de refoulement (244) est raccordé au raccord de pression de sortie (3).

7. Dispositif selon la revendication 5 ou 6, **caractérisé en ce que** le premier raccord (1) peut être raccordé au premier côté de refoulement (242) par la deuxième soupape (6).

8. Dispositif selon l'une quelconque des revendications 5 à 7, lorsqu'elle se réfère à la revendication 2, **caractérisé en ce que** le côté de décharge de volume de la soupape anti-retour (9) est raccordé au premier raccord (1).

9. Dispositif selon l'une quelconque des revendications 5 à 7, lorsqu'elle se réfère à la revendication 2, **caractérisé en ce que** le côté de décharge de volume de la soupape anti-retour (9) est raccordé au raccord de pression de sortie (3)

10. Dispositif selon l'une quelconque des revendications 1 à 9, **caractérisé en ce qu'**il est prévu un premier dispositif de détection de pression (20), qui détecte la pression au premier accord (1), et un deuxième dispositif de détection de pression (21), qui détecte la pression au raccord de pression de sortie (3).

11. Dispositif selon l'une quelconque des revendications 1 à 10, **caractérisé en ce que** la deuxième soupape (6) est formée par une soupape de commande.

12. Système de freinage pour un véhicule automobile destiné à actionner des freins de roue actionnables hydrauliquement (151a - 151d), avec
• un maître-cylindre (100) actionnable par une pédale de frein avec des chambres de pression (133, 134), dans lequel au moins un frein de roue (151a, 151b, 151c, 151d) est associé à chaque chambre de pression,
• un réservoir de stockage de fluide sous pression (140), se trouvant à la pression atmosphérique, associé au maître-cylindre,
• un dispositif de modulation de la pression (150) à commande électrique pour le réglage de pressions de freinage individuellement par roue avec au moins une soupape d'admission (152a - 152d), et en particulier une soupape d'échappement (153a - 153d), pour chaque frein de roue (151a - 151d), et
• un dispositif de pompes-soupapes (160) à commande électrique,
qui comprend au moins un dispositif (161a, 161b) muni d'un premier raccord (101a, 101b), qui est raccordé hydrauliquement à une des chambres de pression (133, 134), d'un deuxième raccord (102a, 102b), qui est raccordé hydrauliquement au réservoir de stockage de fluide sous pression (140), et d'un raccord de pression de sortie (103a, 103b), qui est raccordé hydrauliquement à la soupape d'admission (152a, 152b; 152c, 152d) associée à la chambre de pression (133, 134), dans lequel le dispositif comprend un dispositif de pompe avec au moins un premier côté d'aspiration (141a, 141b) d'une première pompe (104a, 104b), qui est hydrauliquement raccordé directement, sans interposition d'une soupape, au deuxième raccord (102a, 102b), une liaison hydraulique entre le premier raccord et le raccord de pression de sortie, dans laquelle une première soupape (105a, 105b) du type ouverte sans courant à commande analogique est disposée, et une liaison hydraulique entre le premier raccord et le deuxième raccord, dans laquelle une deuxième soupape (106a, 106b) du type fermée sans courant est disposée, **caractérisé en ce que** le premier côté de refoulement (142a, 142b) du dispositif (161a, 161b) associé au premier côté d'aspiration est raccordé hydrauliquement au premier côté d'aspiration par une troisième soupape (108a, 108b) du type ouverte sans courant à commande analogique.

13. Système de freinage selon la revendication 12, **caractérisé en ce qu'**un servofrein (170) est monté avant le maître-cylindre (100).

14. Système de freinage selon la revendication 12, **caractérisé en ce que** le système de freinage comprend un autre dispositif de production de pression (190) à commande électrique, qui est formé en particulier par un ensemble cylindre-piston, dont le piston peut être actionné par un actionneur électromécanique, dans lequel le système de freinage peut être commandé dans un mode de fonctionnement "Brake-by-wire" aussi bien par le conducteur du véhicule qu'indépendamment du conducteur du véhicule.

15. Système de freinage selon la revendication 14, **caractérisé en ce qu'**il est prévu une première unité de commande et de régulation électronique (130) associée au dispositif de production de pression (190) et au dispositif de modulation de pression (150) et une deuxième unité de commande et de régulation électronique (145) associée au dispositif de pompes-soupapes (160).

16. Système de freinage selon l'une quelconque des revendications 12 à 15, **caractérisé en ce que** le dispositif (161a, 161b) présente les caractéristiques supplémentaires d'une des revendications 2 à 11.

17. Système de freinage selon l'une quelconque des revendications 12 à 15, **caractérisé en ce que** le dispositif de pompes-soupapes (160) comprend un tel dispositif (161a, 161b) par chambre de pression (133, 134) du maître-cylindre (100).

18. Système de freinage selon la revendication 17, **caractérisé en ce que** chacun des dispositifs (161a, 161b) présente les caractéristiques supplémentaires d'une des revendications 2 à 11.
